# EUROPEAN PATENT SPECIFICATION

(11) **EP 0 280 661 B1**
(45) Date of publication and mention of the grant of the patent: **10.02.1993**
(21) Application number: 88830062.1
(22) Date of filing: 23.02.1988
(51) Int. Cl.: B65B 9/20, B65B 61/14, B65B 61/18, A47F 9/04

(54) **Process and apparatus for automatically packing goods of different shapes into custom-sized plastic bags on-site manufactured at supermarket check-out counters**
Prozess und Apparat zum automatischen Verpacken von Waren verschiedener Form in angepassten, an Ort und Stelle hergestellten Plastikbeuteln an der Kasse des Ladentisches eines Supermarktes
Procédé et appareil pour l'emballage automatique de marchandises de formes diverses dans des sacs en plastique de forme appropriée fabriqués sur place aux caisses des comptoirs des supermarchés

(30) Priority: 23.02.1987 IT 1946287
(43) Date of publication of application: 31.08.1988
(73) Proprietor: A.W.A.X. PROGETTAZIONE E RICERCA S.r.l., 41058 Vignola (Modena) (IT)
(72) Inventor: Rimondi, Renato, Bazzano Bologna (IT); Cappi, Angelo, Vignola Modena (IT)
(74) Representative: Pizzoli, Pasquale Vincenzo

(56) References cited:
- EP-A- 0 150 689
- CH-A- 429 070
- DE-B- 1 227 379
- US-A- 3 861 119
- US-A- 4 079 662

## Description

The present invention relates to a process and the relevant apparatus for packing goods of different shapes in custom-sized plastic bags, that is to conform to the overall volume of the goods packed therein, manufactured on-site and on-demand at a checkout counter of a supermarket.

Usually, at a supermarket, as the check-out operator registers the price of the items bought by a customer, the latter puts them in a bag which may be of plastic material or of paper. In some instances it is the operator himself or an aid who puts the goods into the bags. Such an operation requires a lot of time thus creating sluggishness in the outgoing movement of customers through the check-out counters of the supermarket.

Another inconvenience of the known bags is that once they are full they remain open at the top so that there is the risk that their content be spilt out especially when the bags are carried by car, bicycle, etc.

A further drawback of the bags is represented by the fact that they have sufficiently large dimensions for accomodating a certain number of items, but they are often used by the customers of just one or two items with resultant waste of plastic.

It is therefore an object of the present invention to provide a process and an apparatus capable of automatically packing goods of different shapes in closed custom-sized bags, that is sized to conform to the overall volume of the goods packed therein by each customer.

Another object of the present invention is to provide a check-out counter incorporating an appatus of the above described type with a simple structure, great realialibity and maximum safety which makes it suitable to be easily used by the counter operator as well as by the customers for packing goods bought by themselves.

The process according to the present invention consists of the process steps as defined in claim 1.

It is already known from EP-A-0 150 689 a process for packaging articles with a stretchable plastic film transformed into a longitudinal tubular wrapper with an hollow former having a circular cross-section. Such a known former is not suitable for the use in a check-counter wherein it has to match with the quadrangular opening for feeding the articles to be bagged. The said opening must have a quadrangular shape in order to allow the passage of big articles, the diagonal of a quadrangular being larger than the diameter of a circular opening having the same length as the major side of the quadrangular opening.

The check-out counter according to the present invention is defined in claim 5.

According to a variant of the present invention the check-out counter incorporating the bagging apparatus has its feeding opening provided with a cover which, when in open position, allows admittance of the goods to be packed inside the bag in formation and controls the increment of the longitudinal dimension of the bag being formed in function of the overall volume of the goods to be packed, while, when in closed position, controls the means for closing the filled-in bag, the optional formation of handles on it and its ejection from the machine. Thanks to such a variant the use of the machine becomes within reach even of the most unexperienced customers.

In accordance with another variant of the present invention, the packaging apparatus inside the counter is provided also with a device for the formation of a pleat or bellows along the opposite sides of the bag and for performing two longitudinal cuts on the top portion of the bag in correspondence of the said pleats. Thanks to such a device the goods are packed in a bag having handles.

According to a variant of the process of the present invention it is made possible to detect possible mistakes made by the counter operators. It happens in fact that when a customer buys a certain number of items at a supermarket, not always he pays the goods actually bought at the exit, but sometimes he pays smaller or larger amounts because of mistakes, unintentional or not, of the counter operator. Thanks to said variant it is possible to rapidly and precisely determine whether the goods bought by a determined customer are exactly those payed by him at the check-out counter. This is obtained by applying on the package of each item being sold a bar code showing, besides the usual data, also the weight of the goods, detecting such a data together with the other contained in the bar code by means of a scanner at the cash register on all the goods bought by a certain customer, weighing successively said goods and finally verifying whether the weight detected by the weighing corresponds to the total weight of the goods as detected by the scanner.

The advantages and features of the present invention shall appear evident to those skilled in the art through the following detailed description with reference to the annexed drawings wherein:
FIGURE 1 is a plan view of a supermarket check-out counter incorporating an apparatus according to the present invention, suitable to be operated specially by the counter operator;
FIGURE 2 is a plan view of a supermarket check-out counter incorporating an apparatus according to the present invention, suitable to be operated specially by the customers directly;
FIGURE 3 is a partially sectioned side elevation view along line III-III of Fig. 1, which relates to an embodiment of the apparatus according to the present invention;
FIGURE 4 is a partially sectioned front view of the apparatus of Fig. 3;
FIGURE 5 is a sectional view along line V-V of Fig. 3;
FIGURE 6 is a sectional view along line VI-VI of Fig. 4;
FIGURES 7 and 8 are enlarged sectional views of the sealing and transverse cutting means of the invention shown during cutting and sealing and after cutting and sealing, respectively;
FIGURES 9 to 15 are partial schematic perspective views of the apparatus during the various phases of the process of filling and forming a custom-sized bag in accordance with one embodiment of the present invention;
FIGURES 16 to 21 are partial schematic perspective views of the apparatus according to another embodiment of the invention;
FIGURE 22 is a perspective view, partly in elevation and partly in section of still another embodiment of the apparatus comprising the device for providing the bag with handles;
FIGURE 23 is an enlarged sectional view of the handle forming means shown in Fig. 22;
FIGURES 24 and 25 are schematic perspective views in elevation of parts of the apparatus at different times during the formation of bags with handles;
FIGURE 26 is a perspective elevational view of the longitudinal heat sealing device; and
FIGURE 27 shows a sectional view of a detail of the heat sealing device shown in Fig. 26.

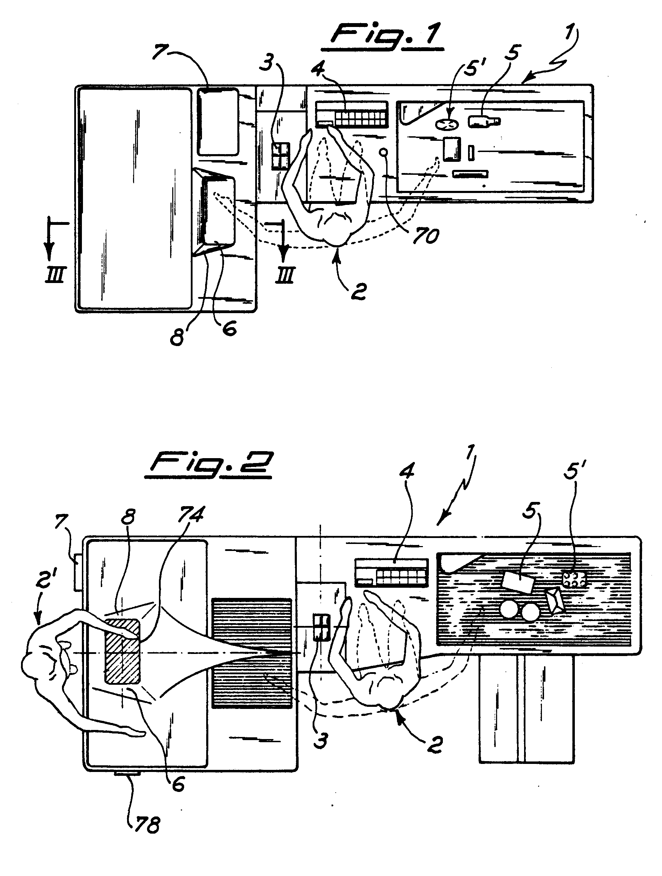

In Figures 1 and 2 are shown two alternative embodiments of supermarket check-out counter 1 constructed in accordance with the present invention. In each a supermarket counter 1 situated before a workplace occupied by a cashier 2 of a supermarket is provided with an automated scanner 3 and a keyboard 4 or, alternatively or additionally with a manual cash register. Beside the cashier there is, usually, a belt conveyor onto which the customer 2ʹ places the goods 5, 5ʹ etc. which, after the cashier has registered their price by means of a scanner or by digiting the price on the keyboard, are inserted by the cashier himself or by the customer into the opening 6 defined on the top surface of the counter 1. Inside the counter 1 there is incorporated the apparatus according to the present invention. The apparatus consists essentially in a frame formed by vertical plates 9, 10 and 11, housing and supporting all the above mentioned means.

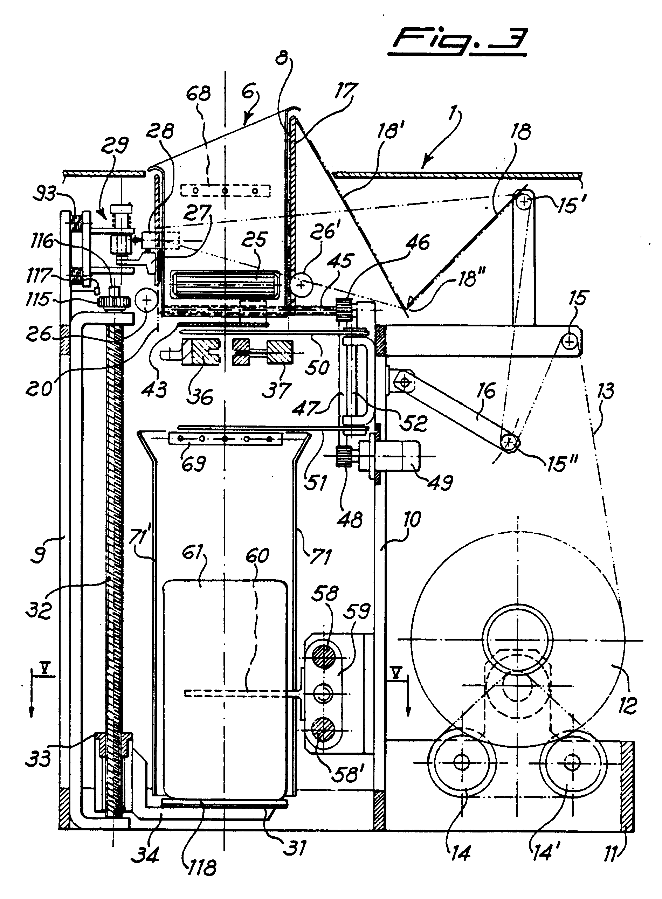

Referring now to Figures 3 and 4, a first embodiment of the invented apparatus incorporated in the check-out counter 1 comprises a roll 12 of flat film 13 placed on a pair of rollers 14 and 14ʹ, which revolve for unrolling the film 13.

Film 13 is drawn from roll 12 and is guided around jockey rollers 15, 15ʹ and intermediate tensioning roller 15ʺ, the letter of which is movably mounted on a constant tension frame 16 as is well known in the art. After passing over jockey roller 15ʹ, film 13 passes along a pair of guiding planes or surfaces 18, 18ʹ disposed in a generally V-shaped orientation, passing under plane or surface 18, through gap 18ʺ between the planes, over plane 18ʹ and into the interior of a generally quadrangular hollow former 17 in such a way that, as will hereinafter become clear, the longitudinal film edges 19, 19ʹ overlap to form a continuous tubular wrapper 20. More particularly, planes 18, 18ʹ, which are disposed with an opening or gap defined between their respective lower edges, each progressively tapers in its transverse dimension of width in the direction of film movement. Thus, plane 18 gradually narrows from its top-disposed edge adjacent roller 13' (which edge is dimensioned at least as wide as the width of the film) to its lower edge. And plane 18' similarly narrows from its lower edge (which is of substantially the same width as the adjacent lower edge of plane 18) to its uppermost edge which is disposed adjacent quadrangular former 17 and has substantially the same width as the said former. This arrangement allows the translation of film 13 from its initially flat condition to a quadrangular tubular wrapper 20 within a hollow quadrangular former 17 in a relatively small room as the one available inside a check-out counter. It should nevertheless be recognized that alternate arrangements (such as a suitably dimensioned roller mounted at the approximate location of the gap defined between planes 18, 18') may be substituted for the V-disposed planes 18, 18', to implement the same function. In order to reduce the height of the apparatus so that it can be incorporated inside a check-out counter it is essential that the transportation path of film 13 from the film roll 12 to the quadrangular former 17 comprises at least one descending part as the one adjacent to plane 18 shown in Fig. 1. The roll 12 instead of a plastic film may be of a similar material, e.g. plastified paper.

The quadrangular former 17 is located immediately under the top surface of the counter and in a matching relationship with the quadrangular opening 6 through which the goods to be bagged are introduced. The quadrangular opening 6 is internally provided with the mouthpiece 8 which makes easier the introduction of the goods into the machines and prevents that these knock against the film 13 before the tubular wrapper 20 is formed. A motor 21, by means of the chain 22 connected to the motor, the pair of helical gears 23 and 23' as well as the pairs of conical gears 24 and 24' gives rotational motion to the roller 25 contacting the tubular wrapper 20. The roller 25 has at one end an helical gear 23 which rotates the roller 26 and, at the opposite end a conical gear 24 which rotates the roller 26ʹ parallel to and having the same dimensions of the roller 26. The roller 26 has at the other end an helical gear 23ʹ and the roller 26ʹ has the other end a conical gear 24ʹ; the said gears rotate the roller 26ʺ which is parallel to and has the same dimensions of roller 26. All the said rollers revolve in such a way as to pull down the tubular wrapper 20 as the flat film 13 unrolled from the roll 12 and is passed along the former 17.

During the continuous downwardly movement of the film 13 along and within the former 17 it is bent into a tube and its superimposed edges 19 and 19ʹ are sealed longitudinally by a welding head 27 which is brought close to said edges by a lever system controlled by an electro-magnet 28. The said components 27 and 28 are parts of the welding device 29 which will be described more in detail further on in this specification. The tubular wrapper thus obtained will be transformed in a bag 30 by a transverse weld which forms the bottom thereof.

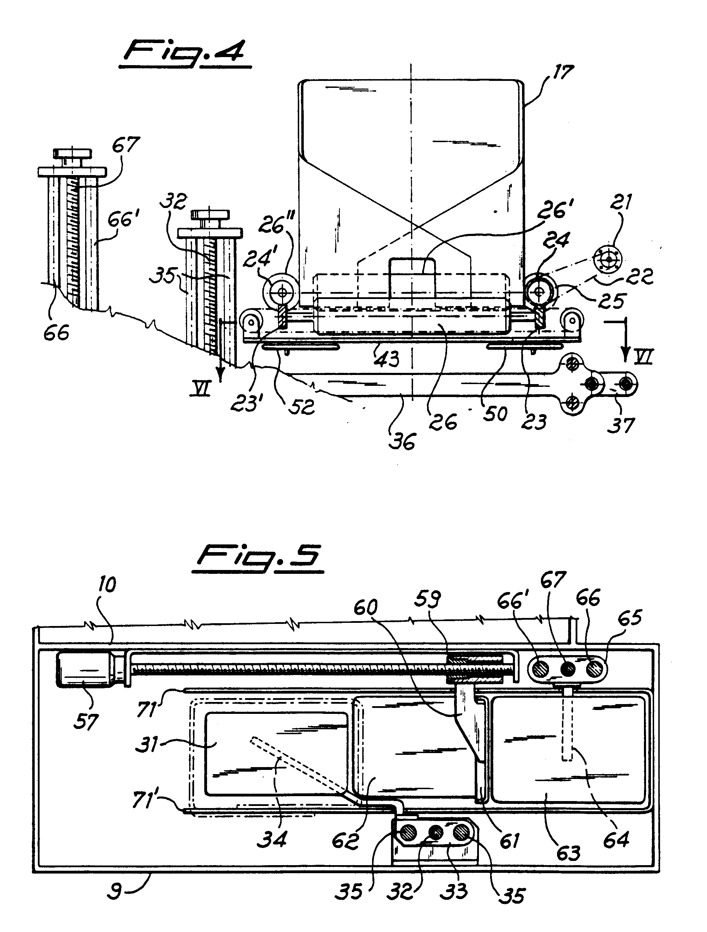

Referring now to Figures 3 and 5, the apparatus includes a loading platform 31 which is devoted to support the bottom of the bag 30 when the goods to be packed are introduced by the cashier or by the customer through the proper opening into the counter 1. The loading platform 31, as it will be described more in detail further on in the description, is susceptible of a vertical downward movement until it reaches a lower position at the bottom of the frame of the machine and then of returning to its top position immediately underneath the opening 6. A bracket 34, placed underneath the platform 31 serves the purpose; it is connected to a lead screw 33 cooperating with the threaded bar 32 to which rotational motion is given by a motor not shown in the figures. In such a way, depending on the sense of rotation of the threaded bar 32, the lead screw 33 raises or descends along the guide bars 35 solidly with the platform 31. As it will be observed further on, the loading platform 31 which supports the bottom of the bag being formed 30, after travelling the short distance of a fixed run, may be halted during its descent at increasingly lower levels as a function of the volume of the goods to be contained in the bag which is thus made-to-measure or custom-sized.

In order to distribute the load on platform 31 and to insure a smooth passage for the platform, a pair of guide bars 35 are provided adjacent threaded bar 32 (Fig. 4). Two unthreaded apertures in lead screw 33 receive the guide bars with a close sliding fit. Of course, other guide means may additionally or alternatively be employed as a matter of design choice.

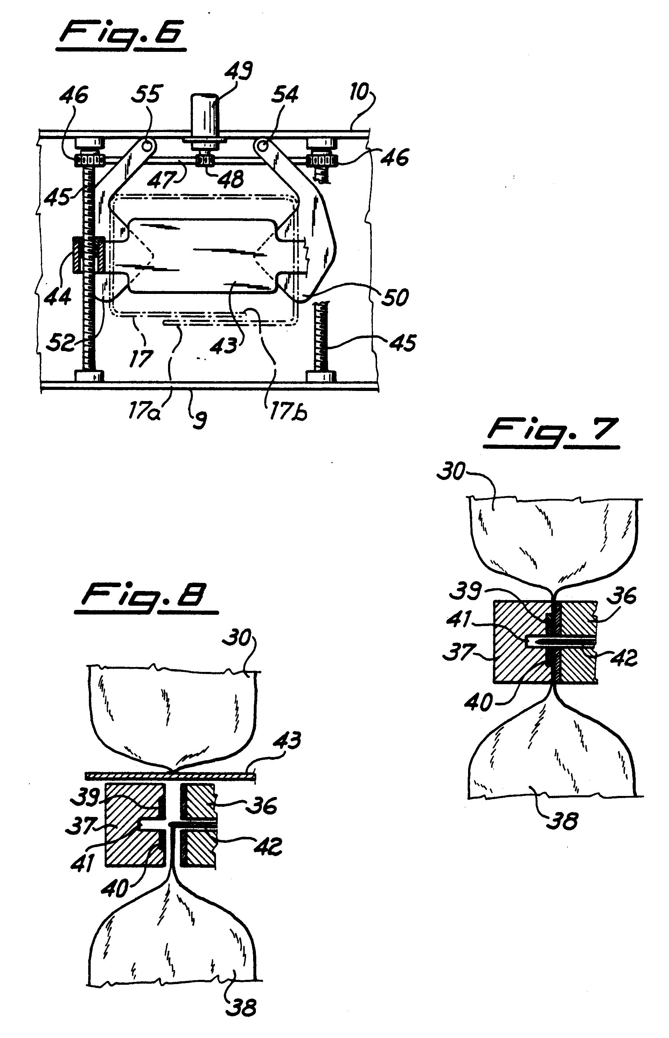

In Figures 7 and 8 is shown the transverse sealing device for closing the full bag 38 and for creating the bottom of the next bag being formed 30. Such a device comprises essentially two welding plates 39 and 40 carried by a reciprocating element 37 which, approaching the other reciprocating element 36 while the tubular wrapper 20 is interposed between them, causes the transverse welding of said wrapper simultaneously along two lines. Along the lower seam takes place the sealing of the top of the bag 38 already filled with the goods, while along the upper seam takes place the sealing of the bottom of the tubular wrapper 20 thus creating the bottom of the next bag 30 being formed.

The welding plates 39 and 40, carried by the reciprocating element 37, are located sideway of a notch 41 inside which a transverse blade 42 fixed to the other reciprocating element 36 may run. Therefore, when the two elements 36 and 37 are approached one towards the other for performing the above-mentioned transverse weldings, simultaneously the blade 42 performs a transverse cut between said weld seams in such a way tha the full bag 38 is detached from the overhanging bag 30 yet being formed.

Above the reciprocating elements 36 and 37 there is a supporting platform 43 for temporarily supporting the bottom of the bag 30 being formed. Such platform is provided on two opposite sides thereof with two female screws 44 engaged onto threaded bars 45 solidly connected to two gears 46 which, by means of a toothed belt or chain 47, are connected with the gear 48 connected to the shaft of the motor 49 which may rotates in both directions.

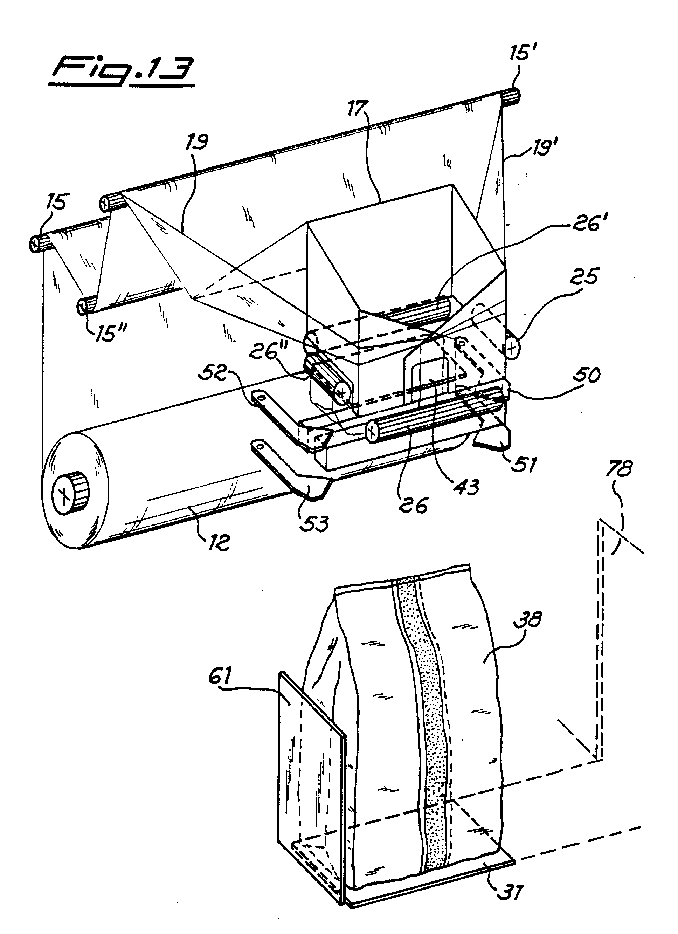

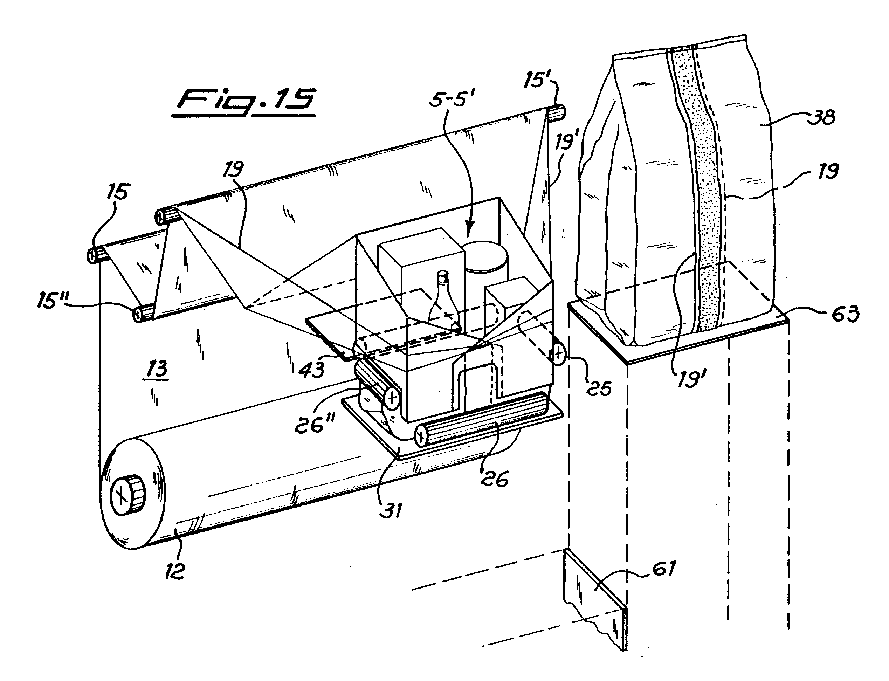

Depending upon the direction of rotation of the motor 49, the support platform 43 moves from a first position under the bottom of the bag 30 (Figs. 6 and 13) to a second position laterally remote from said first position (Fig. 15) or viceversa. The platform 43 reaches the position above the reciprocating elements 36 and 37 for performing its function of temporarily support of the bag being formed 30 when, upon detachment of the full bag 38 sustained by platform 31, the tubular wrapper 20 is no longer held by the two reciprocating elements 36 and 37. The support platform 43, in this position, allows introducing goods in the bag being formed even before the full and sealed bag be ejected from the apparatus.

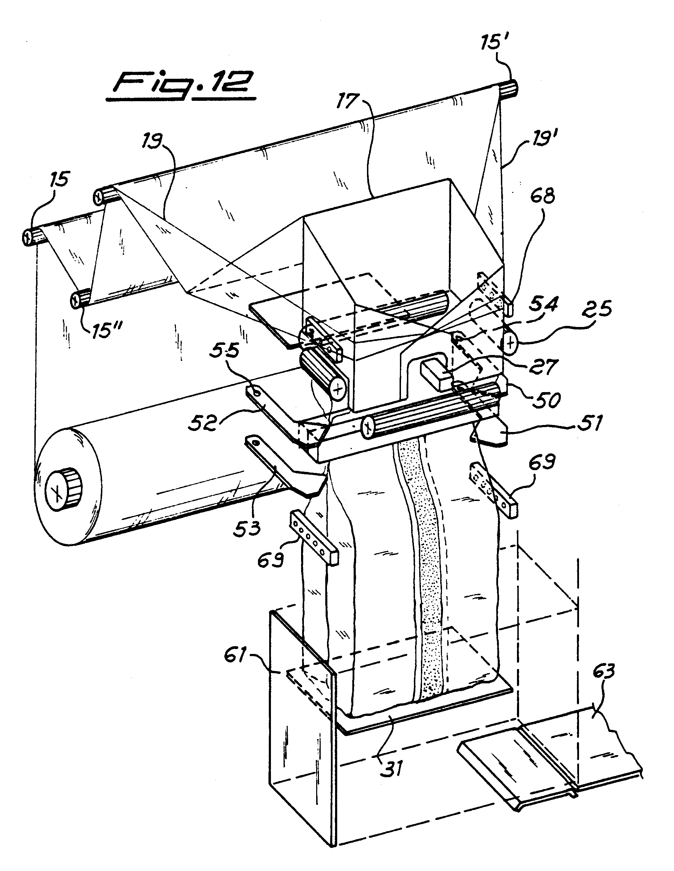

The bags formed by the apparatus are preferably gusseted or pleated. The device for gusseting the bags may be seen, for example in Figures 6 and 12, where two pairs of folders 50, 51 and 52, 53 are disposed for pivotally reciprocating movement about pins 54, 55 along two horizontal planes respectively above and below reciprocating elements 36, 37. Inward movement of the folders from their Figure 12 extreme outer position carries their free ends into engagement with the opposite sides of the now tubularly formed wrapper 20 for the purpose of forming a pleat or gusset on each of the opposite sides of the bag 30 being formed and of a filled bag 38 which is about to be sealed closed. Folders 50, 51, 52 and 53 are driven by any suitable reciprocating drive means (not shown) in timed relation with the various other operating elements of the apparatus as will hereinafter be described.

Figures 3 and 5 show also the device for ejecting the sealed full bag which comprises a motor 57 whose shaft has its threaded end cooperating with a lead screw 59 to which a bracket 60 is connected and is susceptible of a horizontal movement guided by two bars 58 and 58ʹ parallel to the motor's shaft. Connected to said bracket 60 there is a pusher 61 having the function of shifting the full bag 38, once sealed and detached from the bag being formed 30, from the loading platform 31 to the ejection platform 63. This translation of the bag 38 taked place between the two lateral walls 71 and 71ʹ and on the fiwed plane 62 interposed between the two mobile platforms 31 and 63.

The platform 63 may be raised for bringing the full bag in correspondence with the ejection opening 7 (see Figure 1) located on the top surface of the counter 1 in such a way that the ejected bag may be easily picked up by the customer. The means for raising the ejection platform 63 are constituted by a bracket 64 placed below the platform itself and fixed to a block 65 susceptible of a vertical movement fluided by the two bars 66 and 66ʹ and driven by the threaded bar 67. The bar 67 may rotate in two directions and, depending upon the direction of rotation, shifts upward or downward the block 65 solidly with the bracket 64 and with the ejection platform 63. Obviously platform 63, instead of being raised for ejecting the full bag from the exit 7 located on the top portion of the counter 1, could be more simply contrived with a lateral sliding or tipping for the ejection of the full bag from an exit located on the side of the counter 1, but in a position equally well accessible to the customer for picking up the bag. This alternative embodiment will be described later.

Moreover in Figure 3 may also be seen the device for detecting the level of the goods which is composed essentially by two arrays of sensors 68 and 69 placed horizontally outside the former 17 and respectively located one above and the other below the reciprocating elements 36 and 37. Such sensors are generally infra-red optical detectors set in a way as to be obscured by goods passing during the filling of the bag and to be illuminated otherwise. They are capable therefore of detecting the passing of the goods during filling-in of the bag as well as of determining the top level reached by the goods inserted in the bag.

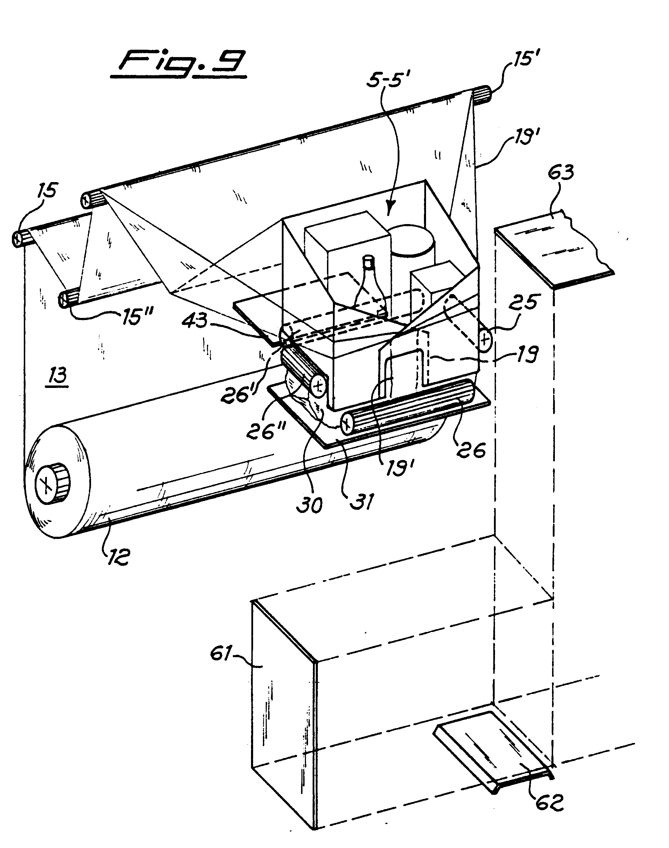

The bag forming apparatus of the invention is also provided with means for determining the position or relative position of loading platform 31 along the vertically reciprocated path between its fully raised position seen in Figure 9 and the Figure 13 fully lowered position. If planar surface 62 is employed, the fully lowered position is adjacent to and substantially level with planar surface 62. It will be recalled that platform 31 is reciprocated through motor driven rotation of vertically disposed lead screw 32 as, for example, by an end-mounted gear 115. In the disclosed form of the invention, the platform position determining means comprises a disc 116 mounted on and rotatable with threaded bar 32, and a sensor 117 for detecting rotations of disc 116 (Figure 3). The combination of disc 116 and sensor 117 may take any of a variety of forms such, for example, as an optically-readable marking or delineation on the disc for detection by optical sensor 117 with each rotation of threaded bar 32 and disc 116 or, in another arrangement, a structural projection from a cam-like disc 116 for actuating engagement with a mechanical switch or sensor 117 as the disc rotates with lead screw 32. By counting the number of rotations carries out by lead screw 32 as platform 31 is raised and lowered, changes in the position or height of the platform can be fairly precisely determined in conjunction with the platform distance known to be traversed during each rotation of lead screw 32. And, given the initial position or height of platform 31, its final position following each subsequent movement will likewise be known.

Those skilled in the art will of course recognize that numerous alternative and/or supplemental arrangements may be employed to monitor or track the position of and amount of vertical movement undergone by loading platform 31. Such alternate implementations, which may or may not use or depend upon the rotation of lead screw 32, are nonetheless within the scope and contemplation of the invention.

In accordance with a particular feature of the invention, it is, as will hereinafter become evident, desirable in some forms of the bag forming apparatus to monitor the weight of a bag 30 being formed as articles are placed or packed therein. For this purpose, a flat plat-type sensor 118 (Figure 3) may be carried on loading platform 31 so that a bag 30, during the placement of articles therein, is directly supported on the weight sensor 118 which is thus interposed between platform 31 and the bag 30. Sensor 118 may comprise any covenient and conventional apparatus capable of generating an output related to the weight of an object supported thereon to the controller of the inventive bag forming and check-out counter system.

The various functional elements and assemblies of the bag forming apparatus are connected to a sequentially operated in accordance with the invention by a controller (not shown). Because the controller, which may take any of a variety of mechanical, electromechaniical and/or electrical and electronic forms well known in the art, is deemed to be within the mechanical ability of one skilled in the art having knowledge of this disclosure, its details are not specifically disclosed herein. Such a controller may nevertheless be readily implemented without undue experimentation in accordance with the teachings of the invention.

The operation of the apparatus shall now be described with particular reference to Figures 9 to 15 which show various steps of the process according to the present invention.

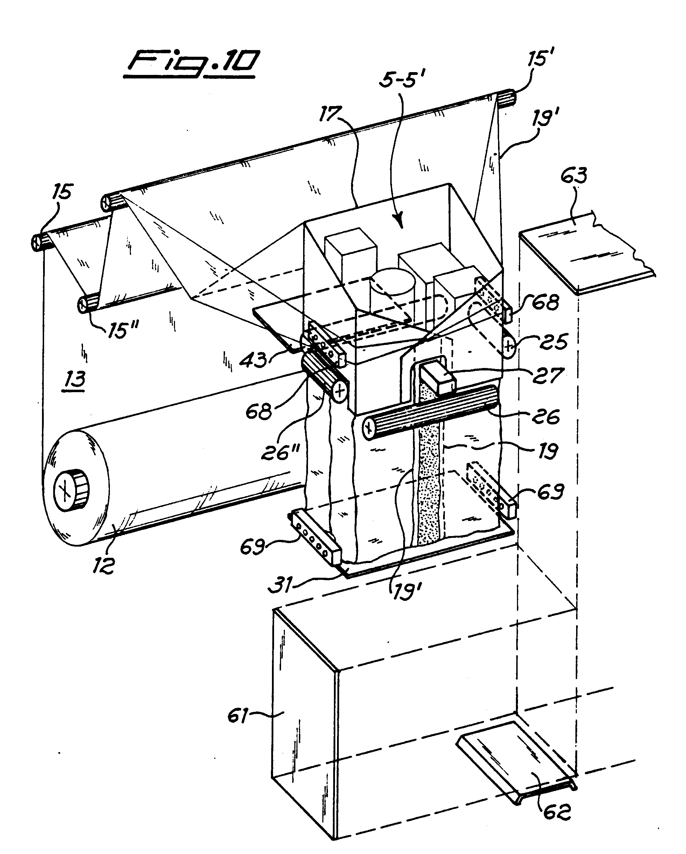

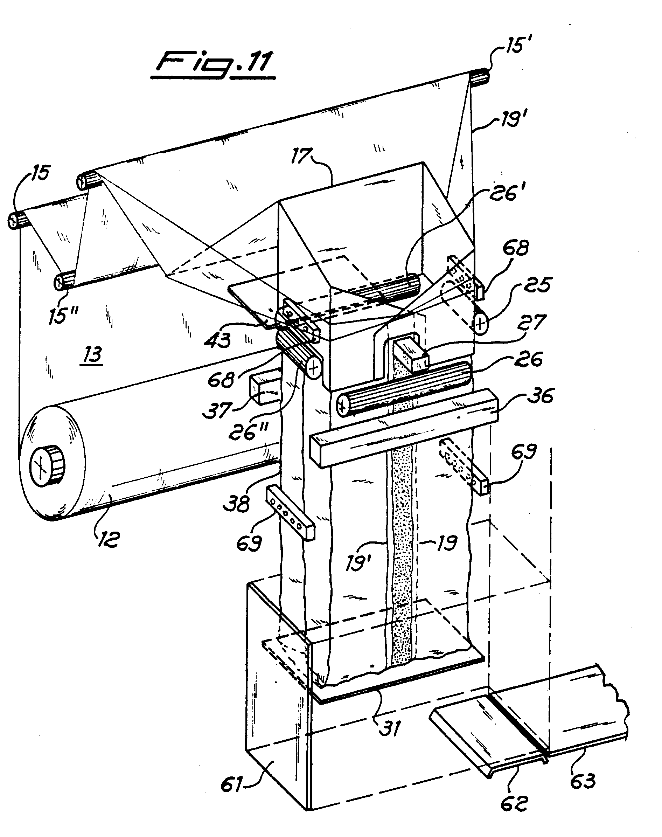

In Figure 9 it is observed the way the goods 5, 5ʹ, etc. are inserted in the bag 30 in formation whose bottom is supported by the loading platform 31. It is desirable that goods be admitted to the bag in such a way as to fully exploit the available space inside it. The apparatus permits a toughtful distribution of the goods inside the bag because during this operation platform 31, and therefore the bag 30 resting on it, stationary. When the space inside the bag being formed has been fully exploited, but there are still goods to be packed, it is necessary obviously to increase the dimensions of the bag being formed and that may be simply obtained by actuating a manual control or push bottom 70 provided on the top surface of the counter 1. Said control, which may be actuated by the cashier as well, is connected to an electronic system of known type which therefore is not described. When control 70 is actuated, the electronic system causes the rotation of rollers 14 and 14ʹ (see Figure 3) which unwind the roll 12 in such a way that other flat film 13 be pulled around the former 17 and thence longitudinally welded by the welder 29 for making longer the bag 30 being formed which is pulled down by the four rollers 25 and 26. Simultaneously the same electronic system makes the loading platform 31 to lower by a preset distance, for example by 24 cm, until the bottom of the bag 30 is brought to a position just below the lower array 69 as it is shown in Figure 10. During this descent by a preset distance loading of the goods continues until exhausting them or until using up all of the available space inside the bag 30. In both instances the cashier acts upon the control 70 so that the loading platform 31 resumes its descent as it is seen in Figure 11. Such descent stops automatically as soon as the lower array 69, which detects the passage of the goods, is illuminated again and that is when the maximum level reached by the goods in the bag is below said array 69.

The descent of the loading platform 31 may be halted automatically also by the control device (not shown) which intervenes when the loading platform 31 has reached a distance from the top array 68 equal to the maximum height that the bag made by the apparatus may have. In fact, when the bag has reached its maximum height and the top array 68 is still detecting the presence of goods, that is if the top level of the goods is not below the array 68, the control device stops the descent of the platform 31 and generates an audible and/or visible alarm to alert that inside the bag there are goods to excess. At this point the operator must remove the goods which are above the top array 68 and as soon as the sensors of this array are again illuminated the down movement of the platform 31 resumes and shall stop automatically, as already said above, as soon as the sensors of the lower array 69 will be illuminated again.

In the event that the goods to be packed are few and/or their total volume does not fill the space available inside the bag being formed, while platform 31 is in its highest position (see Figure 9), it is not necessary of course to perform the second phase of loading. In such a case the cashier depresses twice in succession the push bottoms 70 so that platform 31 does not perform the descent by said present distance, but a short descent in free run which stops as soon as the sensors of the lower array 69 become illuminated again and that is as soon as the maximum level of the goods inserted in the bag is immediately below said sensors.

In all cases, when the control 70 is actuated for a second time and the maximum level of the goods in the bag is below the top array 68, the descending movement of the ejection platform 63 is automatically initiated as well. The run of such a platform is always equal and comprised between the highest position shown in Figure 10 and the lowermost one shown in Figure 11.

Once the sensors of the lower array 69 have been illuminated again determining the stop of the platform 31 and of the overhanging full bag 38, this is ready to be sealed. This takes place by welding and this operation is shown in Figures 12 and 13. At the moment the sensors of the lower array are illuminated again they control also the approach of the elements 36 and 37 so that the welding plates perform the sealing of the top of the full bag 38. Simultaneously they perform the lower seal of the new bag 30 being formed and the blade 42 cuts the film detaching the full bag 38 from the bag 30 being formed.

During the approach of the elements 36 and 37, the two pairs of folders 50, 51, 52 and 53 intervene for creating the longitudinal pleats along the sides of the bag as shown in Figure 12.

As it may be observed in Figure 13, at the end of the sealing and cutting phase of the bags the elements 36 and 37 separate slightly in such a way as to free the top edge of the full bag 38. At this point the platform 31 resumes its descent until reaching its lower position at the same level of the fixed surface 62 and in correspondence of the transverse pusher 61.

The reciprocal separation of the elements 36 and 37, in addition freeing the top edge of the bag 38, also releases the lower edge of the bag 30 being formed thus making possible the lateral translation of the support platform 43 which inserts itself above the elements 36 and 37 and below the just welded bottom of the bag being formed 30. The bottom of this bag may thus rest on the support platform 43 in such a way that admittance of the goods in such a bag may be initiated immediately and even before that the previous whole operation cycle be terminated.

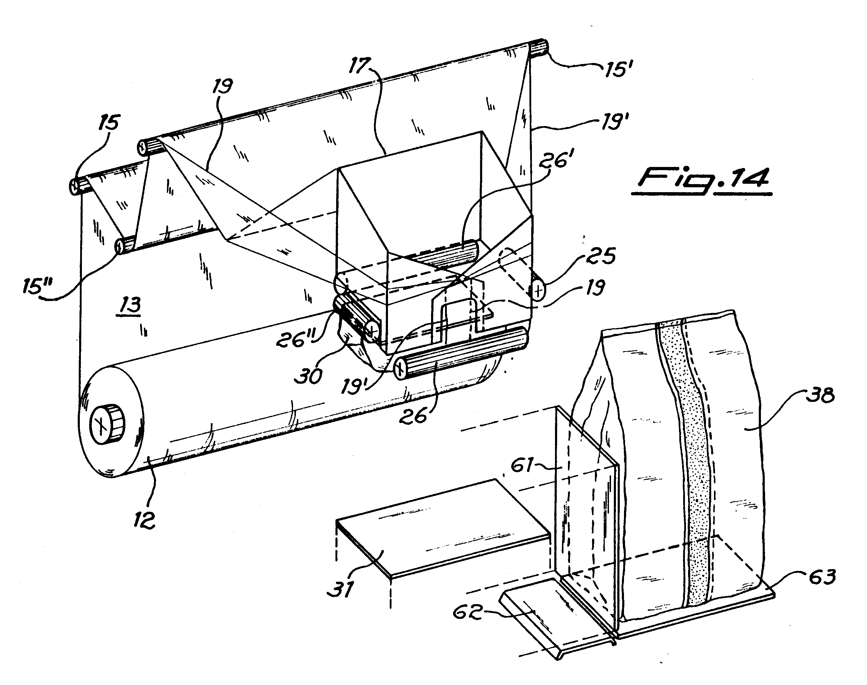

When the loading platform 31 and the ejection platform 63 are both in their lowermost position and at the same level, the pusher 61 pushes the bag 38 shifting it from its position shown in Figure 13 to that shown in Figure 14. The ejection platform 63 starts than to raise automatically carrying the bag with itself to its uppermost position shown in Figure 15 in such a way that the bag may be comfortably picked up by the customer. Simultaneously also the loading platform 31 returns up until assuming its original position and taking the place of the support platform 43 which moves laterally returning in its initial position shown in Figure 15.

Concurrent with the ascending travel of ejection platform 63, lead screw 32 is rotated to raise and return loading platform 31 to its initial position (Fig. 9) immediately under and supporting the new bag 30 being packed with goods. Platform 31 thereby takes the place of support platform 43 which has been moved laterally and thereby returned to its initial position (Fig. 15).

It should be noted that during the ascending return movement of loading platform 31 from its fully lowered (Fig. 13) to its fully raised (Fig. 15) position, gusset formers or folders 50, 51, 52, 53 are in their open or outwardly rotated condition and reciprocating elements 36, 37 are likewise fully separated. Also as loading platform 31 ascends, pusher 61 is returned to its initial position (Fig. 13) in preparation for the bag filling, sealing, and discharge phases of the next operation cycle of the bag forming apparatus.

The embodiment of the apparatus according to the present invention thus far disclosed is preferably provided with devices which automatically control the operation insuring the maximum safety both for the operator as well as for the machine itself. For example below the top edge of the discharge opening 7 there is a sensor, not illustrated, which checks whether the sealed bag 38 has been removed by the customer. If such removal does not take place, the sensors commands the immediate stop of the descent of the ejection platform 63 and the emission of an acoustic and/or visual signal alerting the bystanders that the full bag must be removed.

The sensors' arrays 68 and 69 have also safety functions themselves. They serve avoiding that, for example, a hand incautiously inserted in the opening 6 be hurt by the elements 36 and 37 during their movements or by the platform during its translations above said mobile supports. When the sensors of the top array 68 are obscured by hand incautiously inserted in the machine through the opening 6, they command the reversal of the direction of motion of the elements 36 and 37 and/or of the support platform 43.

The sensor arrays 68, 69 are also used to prevent possible damage to the reciprocating elements 36, 37 should these elements be moved together into heat sealing relation with the film while one or more articles are disposed between them. Although the normal operation of the apparatus (in that the approach of the elements 36, 37 takes place only after the lower arrays 69 detect that the topmost goods packed in the bag 30 have cleared and descended below them) generally suffices to insure that no articles remain between the elements, there are unusual circumstances in which such a determination may not necessarily be dispositive. Where, for example, the elongated neck of a water bottle (through which the infra-red sensor rays may pass) projects above the topmost other goods in the bag 30, the output of the lower arrays 69 may be falsely interpreted to indicate that all articles in the bag have descended therebelow although, in fact, the neck of the water bottle projects upwardly beyond the lower sensors and into the path of the approaching heat sealing elements 36, 37. In order to avoid such an occurrence an independent confirmation that all of the goods have indeed passed below lower arrays 69 may be required before enabling heat sealing approach of reciprocating supports 36, 37.

If employed, as shown and preferred, such independent confirmation may take a variety of forms. In the presently disclosed embodiment of the invention, this feature is implemented by comparing the position of loading platform 31 at two instances (first, when the upper sensor arrays 68 detect passage of the topmost articles packed in the bag 30, and second, when the lower sensor arrays 69 detect passage therebelow of the topmost articles packed in the bag. Only when the difference in those two sensed positions of loading platform 31 is at least as great as the known distance between the upper and lower arrays 68, 69 will reciprocating elements 36, 37 be operated to move them into heat sealing relation with the tubular film wrapper 20. Where on the other hand the difference in the sensed positions of platform 31 as the topmost articles in bag 30 pass each of the upper and lower sensor arrays 68, 69, respectively, is less than the known fixed distance between the upper and lower arrays, platform 31 is lowered by an additional distance corresponding to that difference before reciprocating elements 36, 37 are permitted to begin their film sealing approach.

Thus, in the above-mentioned example wherein a water bottle neck protrudes above the topmost other goods in the bag 30 and lower sensor arrays 69 produce an incorrect determination of the maximum height of the goods in the bag, upper sensor arrays 68 will nonetheless properly register the top cap of the bottle (which obscures the infra-red rays of the top sensors) as the water bottle cap passes and descends below upper arrays 68. Thus, although it appears to lower arrays 69 that all of the articles in bag 30 have cleared the lower arrays even though the neck of the water bottle has not, the reciprocating elements 36, 37 are prevented from moving into heat sealing relation with the film until loading platform 31 descends by an additional amount sufficient to move the entire water bottle below sensors 69. As previously described, sensing of the position of loading platform 31 may be carried out in a variety of ways including, for example, the combination of disc 116 on threaded bar 32 and cooperative sensor 117 (Figure 3).

The electronic system that, coupled to the mechanical actuation of the various parts described above, performs the functions required from the machine according to the various embodiments of the present invention has not been described in details because any technician of the field would not have any difficulty to reduce it to practice once its above-mentioned functions have been illustrated.

As it has already been said before, the apparatus according to the present invention may have different embodiments making it particularly suitable for certain functions or for certain uses. For example, a modification consists in making the apparatus suitable to be operated even by the most unexperienced customers by providing the machine further safety devices.

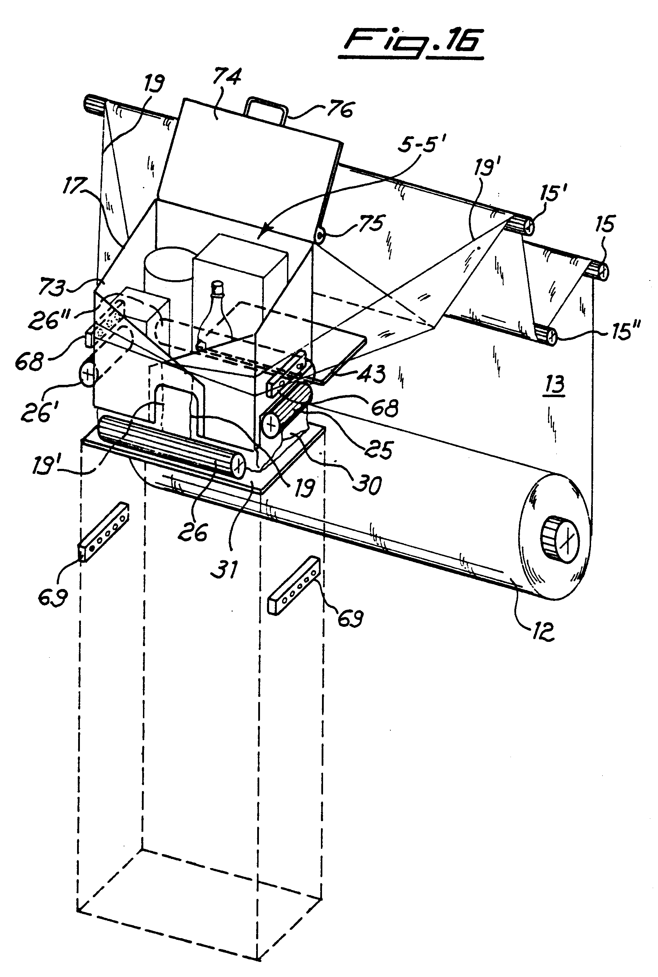

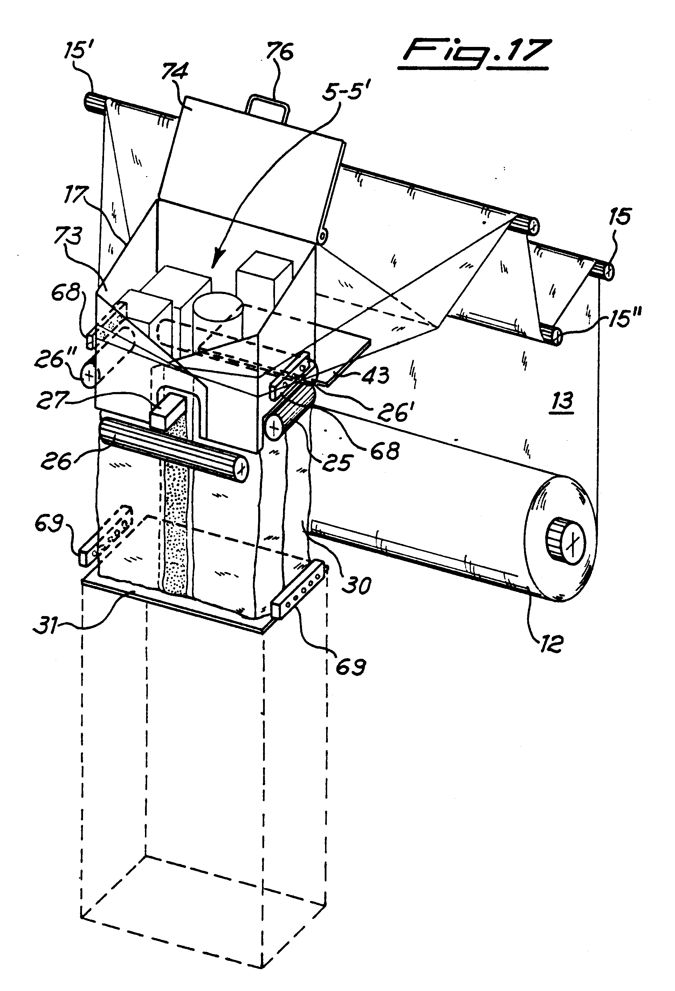

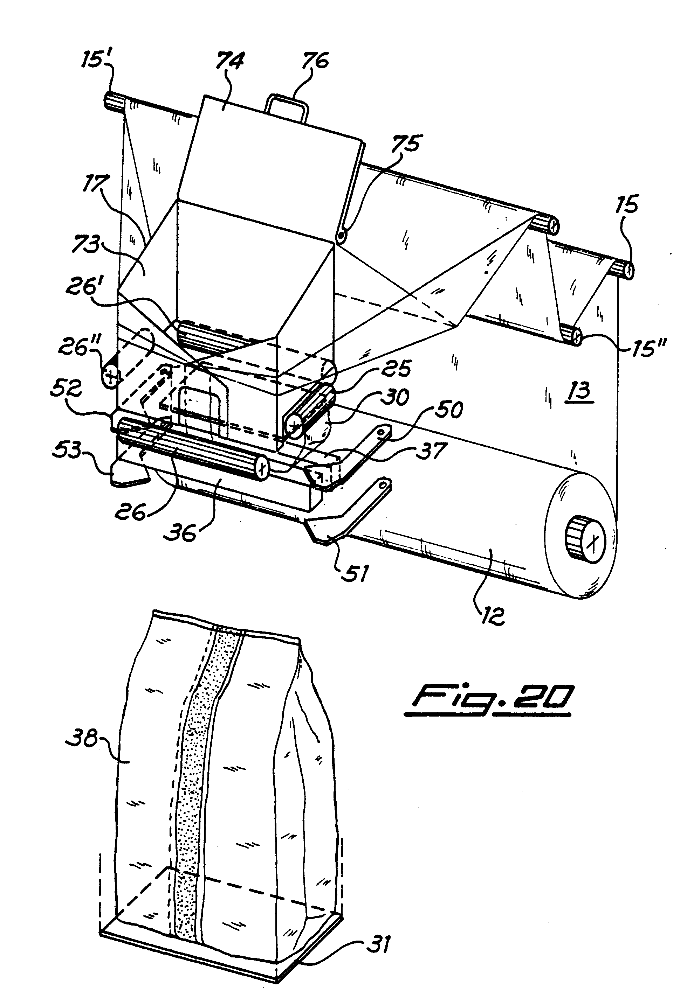

Thus the check-out counter of Figure 2 differs from the one of Figure 1 since it incorporates the machine modified in the above-mentioned way. The apparatus of Figure 2 is practically identical to the one of Figure 1 with the difference of the presence of a cover 74 protecting the opening 6 which for the remaining corresponds to opening 6 of the counter 1 shown in Figure 1. Such a cover 74, provided with hinges 75 and handle 76 with which it can be operated, is purposely connected with other devices of the machine and its function shall become evident from the following description with reference to Figures 16 to 21.

Referring first to Figure 16, at the beginning of an operation cycle the loading platform 31 is resting below the top array 68 and at a certain distance from the opening 6, for example at a distance of about 22 cm. The bag being formed 30 whose bottom is supported by the loading platform 31 may be filled with goods 5, 5ʹ, etc. through the opening 6 when the cover 74 is in its open position. During the insertion of goods in the bag 30 the array 68 is obscured by the passage of the goods and puts in motion, by suitable means not illustrated, a motor which slowly lowers the loading platform 31. In this way, during the entire period of time when new items are introduced inside the bag 30 being formed, its longitudinal dimension continuously increases.

When the loading of the goods in the bag 30 is terminated or interrupted, the top array 68 is no longer obscured and therefore it commands the stop of the descent of the loading platform 31. If, however, items are continued to be loaded in the bag 30, thus keeping obscured the array 68, the platform 31 may descend to a maximum level corresponding to the maximum height which can have the bag manufactured with this apparatus and which is determined by an automatic control device not shown in the figure.

When the customer has packed all his articles into the bag or when the latter has been filled up to its maximum capacity, he may close the opening 6 by lowering the cover 74. In case the customer had introduced into the bag goods in excess of the maximum allowed capacity, they would hinder the closing of the cover 74 and therefore the customer will be compelled to remove the exceeding items until it is made possible to lower completely and to close the cover 74. A safety device locks the cover 74 once it has been correctly closed and therefore the customer may no longer have acccess to the opening 6 until the cover will open again automatically for starting a new operation cycle. Such a safety device is actuated in a known manner through the activation of an electro-magnet not illustrated in the figures.

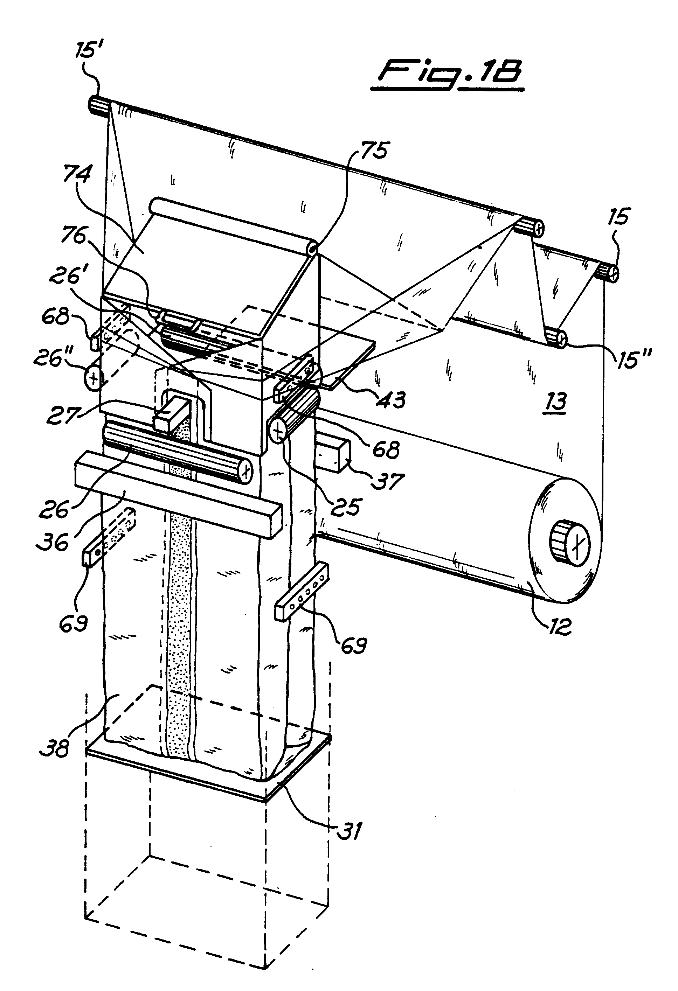

The cover 74, once closed, enables the powering means of the loading platform 31 which is lowered again. Such a descent stops as soon as the lower array 69 becomes illuminated again, that is as soon as the top level of the goods inserted in the bag is immediately below said array as shown in Figure 18.

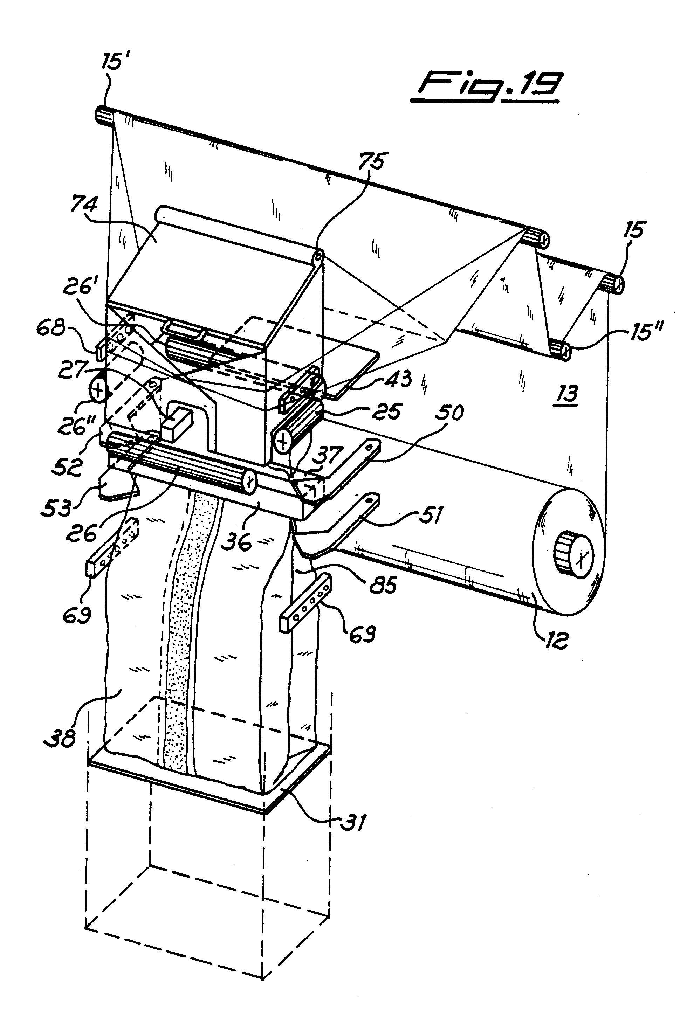

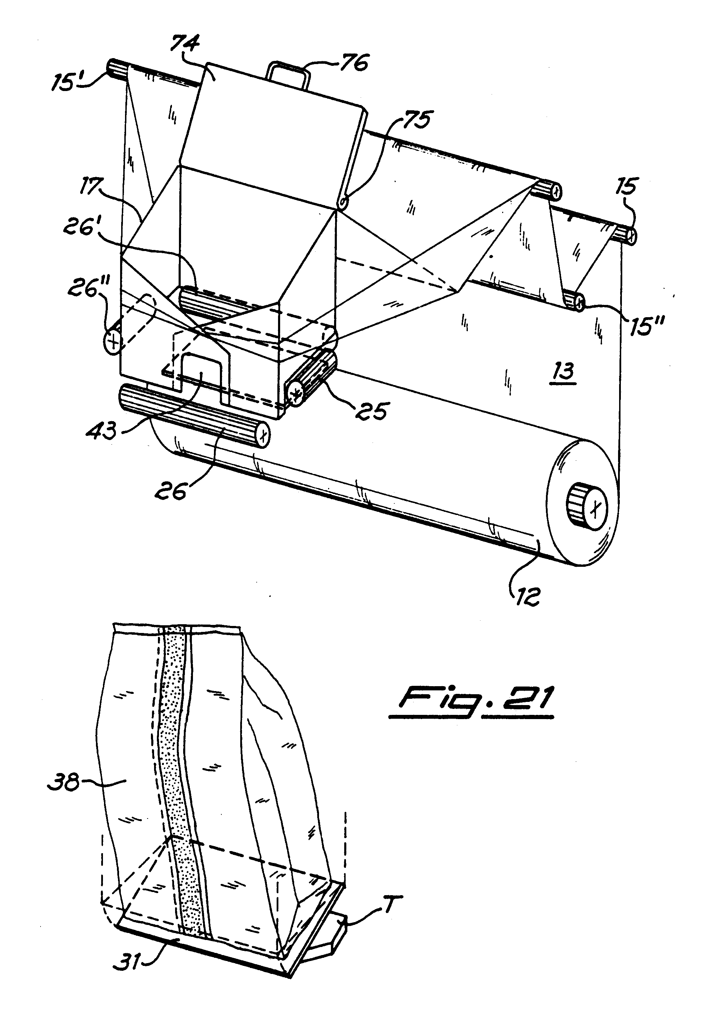

Referring now to Figure 19, concurrent with the end of downward movement of platform 31, the array 69, no longer obscured, commands the reciprocal approach of the elements 36 and 37 and the resulting sealing of the top of the full bag 38, the sealing of the bottom of the bag 30 being formed, as well as the trasverse cut which determines the detachment between said bags. At this point the bag 38 is full and ready to be expelled; therefore platform 31 is further lowered to its lowermost position where it is tipped by the motor actuated linkage T as shown in Figure 21. As a consequence of such a tipping the bag 38 is pushed against an opening (not shown) in a side or end wall of the counter from which is can be easily picked up by the customer.

Another simple way for expelling the bag 38 out of the counter is to let it go out through a lateral opening 78 aligned with pusher 61. In such a case the platform 63 is abolished and substituted by a single plane placed between platform 31 and opening 78. The bag 38, when it has reached the lowermost position shown in Figure 13, is pushed by the pusher 61 which ejects it through the opening 78 indicated with dash lines in Figure 13. The plane placed between the pusher 61 and the opening 78, on which the bag 38 slides under the action of pusher 63, is preferably inclined so that the opening 78 can be placed at a higher position more easily accessible to the customer for picking up the bag 38.

Following ejection of the full bag 38, the loading platform 31 reascends to its uppermost position where takes the place of the support platform 43 which returns in its lateral position as shown in Figure 16. In fact the support platform 43 had shifted to its central position for sustaining the full bag 38 after its detachment from the bag being formed 30. by this contrivance, as above specified, it is possible beginning to introduce items inside the bag being formed 30 before terminating the previous operation cycle. To this end, as soon as the bottom of the bag 30 is supported by the support platform 43, the cover 74 opens automatially thus making possible the start of a new loading cycle.

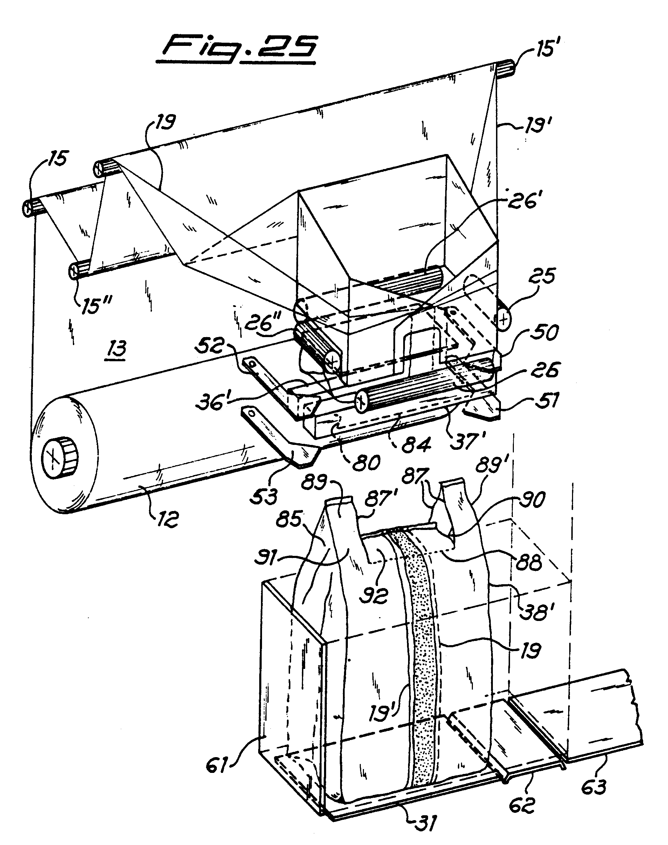

Another aspect of the present invention lies in the bags formed or formable by the apparatus, whereby the structure of the fully sealed and closed article-containing bags may integrally and unitarily incorporate handles to facilitate their transport. As shown in Figure 25, the improved bag 38ʹ of the invention is heat sealed closed along its top edge and includes longitudinal cuts 87, 87ʹ transverse to the top closing seal and defining handles 89, 89ʹ inwardly spaced from and adjoining the sides of the bag. Additionally, a perforation 88 is also preferably defined in each of the front and rear faces of the bag 38ʹ between and bridging handles 89, 89ʹ. These perforations 88, as will hereinafter become clear, facilitate subsequent opening of the sealed bag 38ʹ for permitting access to and removal of its contents, and also reliably enable reuse of the bag after its original contents have been emptied therefrom. Indeed, even with a sealed bag without handles, the inclusion of perforations for facilitating the opening of the bags at home may be desirably and may be included in the bag formation.

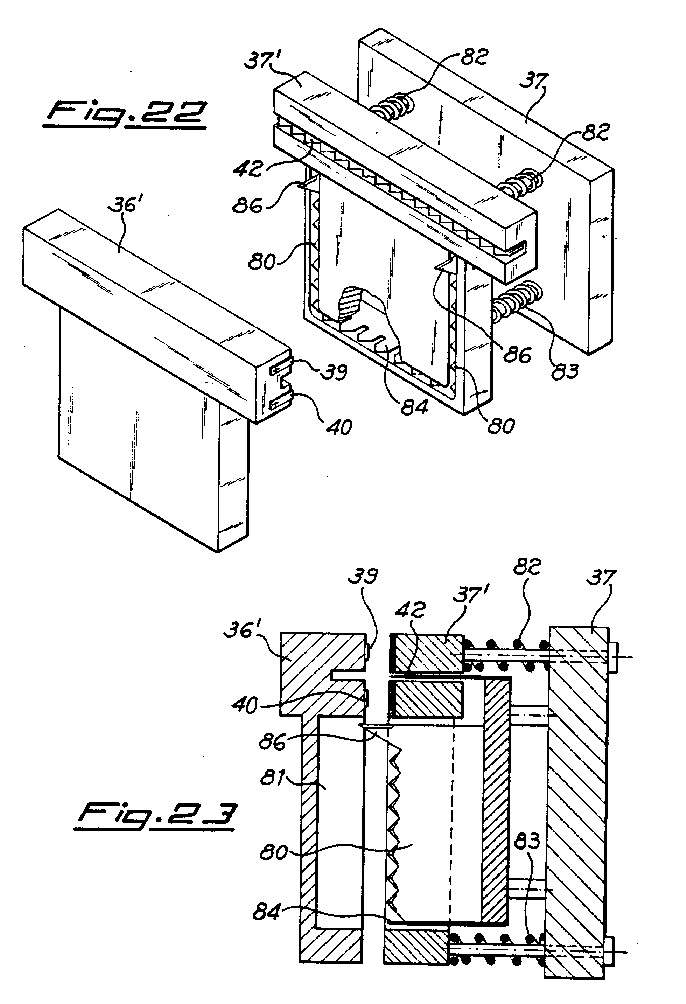

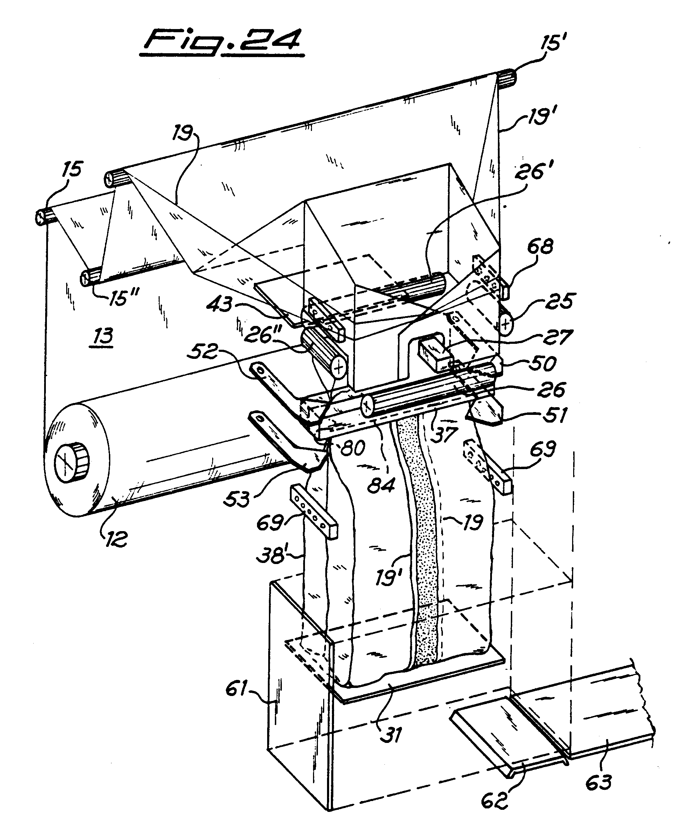

The improved bag 38ʹ is formable by the apparatus of the invention utilizing modified reciprocating elements 36ʹ, 37ʹ which are illustrated in Figures 22 and 23. As there shown, reciprocating element 37ʹ carries, in addition to the transverse blade 42 heretofore described, two longitudinaly-oriented (e.g. vertical) elongated blades 80, preferably although not necessarily serrated or jagged, located so as to be below the lower heat seal 40 of reciprocating element 36ʹ when the elements 36ʹ, 37ʹ are moved into heat sealing engagement with the interposed tubular film wrapper 20. Element 36ʹ correspondingly carries two blade receiving spaces or grooves 81, only one of which is visible in Figure 23. Two pair of compression springs 82, 83 urge reciprocating element 37ʹ against element 36ʹ during the heat sealing and cutting of the film.

The two longitudinal blades 80 are joined together at their lower ends by a substantially horizontal perforating die or blade 84. The blades 80 are positioned so that, as reciprocating elements 36ʹ, 37ʹ are moved together about the tubular film wrapper of bag 38ʹ, they contact the bag just interior or clear of the lateral extent of the gussets 85 formed by the free ends of folders 51, 53 on each side of the full bag 38ʹ. Thus, as the compression springs 82, 83 press the reciprocating elements 36ʹ, 37ʹ against the interposed tubular film wrapper 20, the blades 80 are driven through the front and rear faces of bag 38ʹ and, consequently, through two layers of film 13 to thus sever said layers along the two lines defined by blades 80.

It is also within the contemplation of the invention that the blades 80 be positioned instead so that they contact the face of bag 38ʹ with the lateral extent of the gussets 85. In this alternate case, approach and engagement of reciprocating elements 36ʹ, 37ʹ about the interposed film wrapper 20 drives each of the blades 80 through one fo the gusseted portions of bag 38ʹ and, consequently, through four layers of film 13 to form a strip or bridge of film between the bag handles and the overlying protective envelope. This results, as will become evident, in a closed bag structure from which the chance of inadvertent spillage of the bag's contents is substantially minimized.

Each of the longitudinal blades 80 is also preferably provided with a projecting portion 86 which extends outwardly from element 37ʹ by a distance sufficient so that, when reciprocating elements 36ʹ, 37ʹ initially separate following heat sealing contact with the film, the projecting portions 86 continue to bridge the gap between the slightly separated elements 36ʹ, 37ʹ as shown in Figure 23. The purpose of projections 86 will become apparent hereinafter.

The operation of the above-mentioned will be better understood by reference to Figures 24 and 25. The elements 36ʹ, 37ʹ through their reciprocal approach perform the functions already described in connection with the other embodiments of the apparatus so that they cause the formation of the pleats 85, the welding of the top of the bag 38ʹ and the welding of the bottom of the bag 30 being formed by means of the welding plates 39 and 40, as well as the transverse cut between said weldings by means of the blade 42. In the instant embodiment though, the approach of the elements 36ʹ and 37ʹ produces also two longitudinal cuts 87 and 87ʹ by means of the blades 80 in correspondence of the pleats 85 as well as a series or line of punched holes 88 by means of the perforating die 84.

When the elements 36ʹ and 37ʹ, after the weldings and the cuts described above, have been made separate slightly (see Figure 25), the further descent of the bag 38ʹ causes the cut (by means of the projecting portion of the two blades 80) of the top weld seam of the full bag 38ʹ in a longitudinal direction and in correspondence of two suitably spaced points thereof. In this manner, on the bag 38ʹ two handles 89 and 89ʹ are formed and which may be handled through the openings 90 and 91 which have been created by the longitudinal cuts 87 and 87ʹ in correspondence of the pleats 85 along the opposite sides of the bag 38ʹ.

It is to be noted that the top portion of the bag comprised between the longitudinal cuts 87 and 87ʹ remains integral and forms an envelope 92 which prevents accidental outpouring of the items contained in the bag 38ʹ during transportation. Such a protecting envelope 92 may be later easily teared for emptying the bag 38ʹ. Such a tearing is made easier by the perforation 88 produced by the perforating die 84. Once the bag 38ʹ has been emptied it may be re-utilized advantageously as a normal bag.

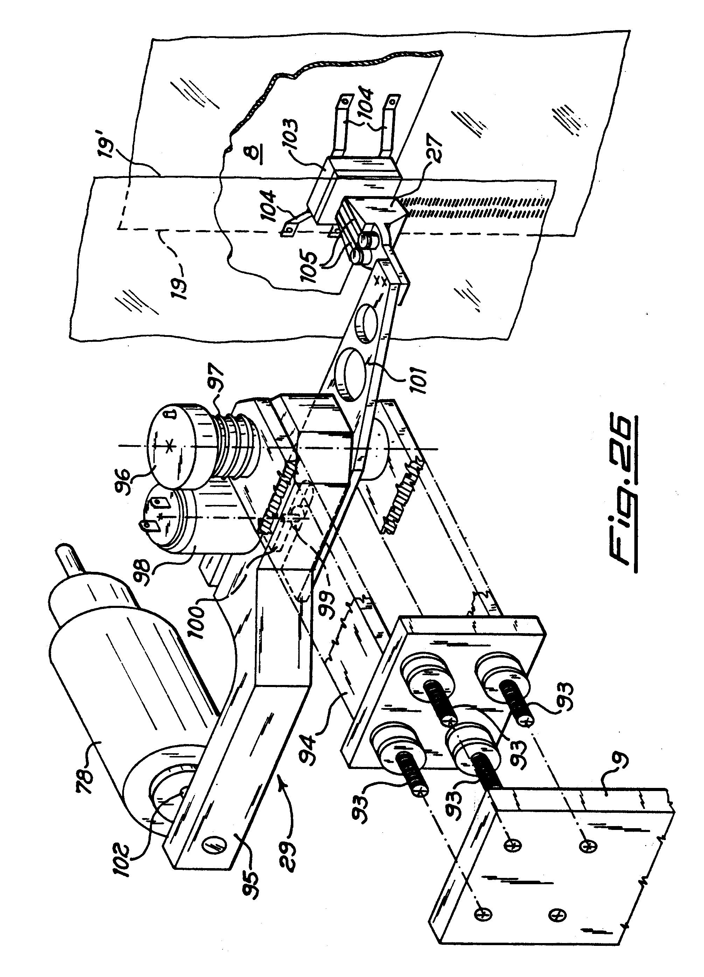

Figure 26 shows the details of the welding unit, which is generally indicated with 29 in Figure 3, for heat sealing the overlapped edges 19, 19ʹ of the film 13 as the film is formed into a tubular wrapper 20 within the interior of former 17. Such a welding unit is supported by the bracket 94 which is joined through the four connectors 93 to the plate 9 which is part of the frame of the apparatus. Connectors 93 preferably have vibration damping grommets or rubber rings mounted thereon in order to minimize mechanical disturbance to the remainder of the apparatus. The welding head 27 is carried on one end of a rocker arm 101 which is mounted for pivotal movement about a vertical shaft 96 and in which a groove 100 is defined at its end opposite head 27. A lever 95 mounted at one of its ends for pivotal movement about shaft 96 is connected at its opposite end to the shaft 102 of an electromagnet 28, preferably rigidly joined to the frame of the machine. A return torsion spring 97 disposed about shaft 96 between the shaft head and lever 95 urges the lever clockwise into contact with the end of the electromagnet shaft 102. The shaft of an electric motor 98 fixed to and mounted on lever 95 carries a cam 99 disposed in the groove 100 of rocker arm 101.

When the electromagnet 28 is actuated, lever 95 and, through its cammed connection, rocker arm 101, are driven through a partial counterclockwise rotation about shaft 96 against the urging of torsion spring 97. As rocker arm 101 so rotates, it carries welding head 27 towards the superposed edges 19, 19ʹ of the film 13.

When on the other hand electromagnet 28 is not actuated, return spring 97 places a clockwise urgency on lever 95 and rocker arm 101 to carry and maintain welding head 27 out of contact with the superimposed edges of the film. This inactive or non-heat sealing position of the welding head permits facilitated manual feeding of film 13 into the interior of former 17 to be readily carried out when, for example, it is necessary to replace an exhausted film roll 12 supported on rollers 14, 14ʹ.

When electro-magnet 28 is actuated the welding unit 29 is in working position so that the welding head 27 approaches the edges 19 and 19ʹ which are in contact with the contrasting plate 103 elastically joined to the mouthpiece 8 by means of the springs 104. Simultaneously the welding head 27 starts to hammer the superimposed edges 19 and 19ʹ of the tubular wrapper 20 which vertically flows downwards along the constrasting plate 103 and in this way the welding head performs its welding action. The hammering action of the welding head 27 on the contrasting plate 103 is controlled by the motor 98 which rotates the cam 99 which in its turn, through the groove 100, causes the high frequency (for example from 50 to 80 Hz) oscillation of the rocker arm 101 around the pivot 96. As an alternative the above-mentioned group consisting of motor 98, cam 99 and groove 100 might be replaced with an electromagnet acting on the rocker arm 101.

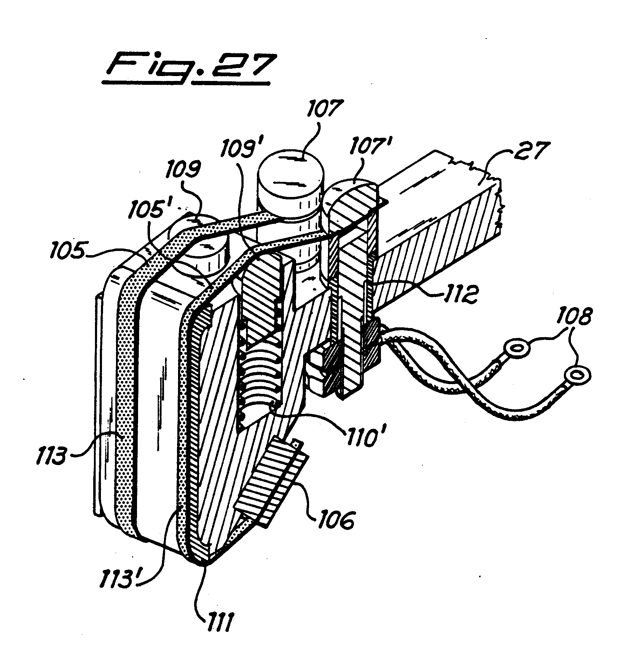

As it is shown in Figure 27 the welding head 27 is provided with two electrical strap resistors 105 and 105ʹ connected in series by means of the U-connector 106 and electrically connected to a power source (not shown) by means of the terminals 107 and 107ʹ of the cable 108. The pushers 109 made of insulating material and mounted on the springs 110 and 110ʹ (only spring 110 is shown in the figure) compensate the terminal expansion of the strap resistors 105 and 105ʹ so that a perfect tension of the resistors is permanently secured. The spacers 111 and 112, also made of insulating material, secure the insulation of the electric circuit from the metal casing of the welding head 27.

Heat is supplied to the edges of film to be welded by means of conduction through the flat front surfaces 113 and 113ʹ of the strap resistors 105 and 105ʹ. For a successful performance of the welding operation it is particularly important to control the temperature values of the resistors 105 and 105ʹ which are to be kept in a rather restricted range. Such a control can be effected in a known way with an electronic control system which surveys the instant temperature value of the resistors 105 and 105ʹ by determining the instant value of electrical resistance of the said resistors at the terminals 107 and 107ʹ. The resistance value is compared with a predetermined reference value corresponding to the desired temperature level and the electronic control system keeps the difference between the two values within a range sufficiently restricted by controlling the electric power supplied to the resistors 105 and 105ʹ.

From the above it is evident that the welding of the superimposed edges 19 and 19ʹ of the tubular wrapper 20 is effected by means of two simultaneous actions having thermal and mechanical character respectively, i.e. the local softening of the film caused by heat supplied through the resistors 105 and 105ʹ and the high frequency (58-80 Hz) hammering of the softened area of the film. The intermittency of the hammering action allows also a smooth flow of the film under the welding head 27.

Besides the above described embodiments of the apparatus according to the present invention, a modified embodiment of the process of the present invention will now be described. Such a modified embodiment consists in detecting possible mistakes of cashiers. Implementation of such a modified embodiment, which comprises four operation phases, does not present problems in so far it may be implemented by known and readily available means. The first operation phase, that is the application of a bar code on the packaging of the items being sold, it is per se a widely implemented procedure, for the purposes of the process of the invention it is only necessary to insert in said bar code also the data relative to the weight of the item.

Also implementing the second operation phase does not present any problem, being a widely utilized procedure. The scanners for reading the bar codes offer such and many advantages to the management of department stores, supermarkets and other large distribution centers, that almost nobody does without them.

For implementing the third operation phase it is sufficient utilizing any weighing device. It is, nevertheless, preferable to use electronic type weighing apparatus which may be suitably connected to the scanner 3 (Figure 2) in order to perform automatically also the fourth operation phase, that is the comparison between the total weight of the items packed in the bag and that of the items effectively bought and paid by the customer.

It is evident that such weights must coincide substantially; in case this does not happen there must be a mistake in defect or in excess by part of the cashier which is thus detected according to the objective of this modified embodiment of the process of the present invention. Such a modified embodiment may be advantageously implemented in a substantially automatic fashion by applying an electronic weighing device directly to the packing machine as described above and installed beyond the cash register.

Thus, the various embodiments of processes, apparatus and articles hereinabove described in accordance with the invention provide for the automated packaging of widely varied volumes of goods in custom-sized bags, manufactured on-site and on-demand in accordance with the volume of goods to be packed. Each bag may have a height continuously or step-wise variable between a minimum and a maximum (as for example between about 10 to 15 cm and about 50 cm) depending upon the particular installation and selectable design criteria at the option of the user.

While there have been shown and described numerous novel features of the invention as applied to several preferred and/o illustrative embodiments thereof, it will be understood that various omissions and substitutions and changes in the form and details of the devices illustrated and in their operation and in the methods and processes described, may be made by those skilled in the art without the departing from the invention. Indeed, since there are so many novel features, many may be omitted if desired without departing from the invention, and the described structure is generally preferred but not required, modifications being possible without departing from this invention. It is the intention, therefore, that this invention be limited only as indicated by the scope of the claims appended hereto.

## Claims

1. Process for manufacturing bags from a flat plastic film in a check-out counter and for packing articles within the bags being formed, comprising the steps of:
transforming the flat plastic film into a longitudinal tubular wrapper by means of a hollow former having a quadrangular cross-section;
feeding the articles to be packed into the said tubular wrapper through a quadrangular opening located on the top of the check-out counter and matching with the top end of the said hollow former;
transversely cutting and sealing said tubular wrapper to form the bottom of the bag to be filled with articles and to close the top of the filled bag.

2. Process in accordance with claim 1, characterized in that it further comprises the step of feeding the flat plastic film from the film roll to the former along a path which includes at least one descending part.

3. Process in accordance with claim 1 or 2, characterized in that it further comprises the step of longitudinally cutting the tubular wrapper from the top of the bag to a point intermediate the top and bottom to provide a pair of handles and a protective envelope therebetween.

4. Process in accordance with claim 3, characterized in that it further comprises transversely perforating the tubular wrapper between said handles for facilitating the subsequent opening of the protective envelope.

5. Check-out counter incorporating an apparatus for packing articles in bags manufactured on-site, said apparatus comprising:
a hollow former (17) having a quadrangular cross-section for transforming a flat plastic film (13) into a longitudinal extending tubular wrapper (20);
means (39, 40, 42) for transversely cutting the tubular wrapper (20) and for sealing the tubular wrapper (20) to create a closed bottom of a bag being formed and to close the top of the filled bag;
a quadrangular opening (6) located on the top of the check-out counter and matching with the top end of the former (17) to feed articles into the underlying tubular wrapper (20).

6. Check-out counter according to claim 5, characterized in that the feeding path of the flat film (13) from the film roll (12) to the former (17) includes at least one descending part (18).

7. Check-out counter according to claim 5 or 6, characterized in that the quadrangular opening (6) is provided with a cover (74) apt to blocking itself in its closed position until the top of the filled bag (38) has been sealed.

8. Check-out counter according to claim 5, characterized in that it further comprises means for forming a pair of spaced apart handles (89, 89') on the top of the bag (38) and for defining a protective envelope (92) intermediate said handles.

9. Check-out counter according to claim 8, further comprising means for perforating the top of the bag (38) between said handles.

10. Check-out counter according to claim 5, characterized in that it further comprises means (118) for continuously sensing the weight of the articles in the bag being formed (30).

## Patentansprüche

1. Verfahren zur Herstellung von Beuteln aus einer flachen Kunststoffolie in (an) einem Ausgabeschalter oder Ladentisch und zum Verpacken von Artikeln in den hergestellten Beutein, umfassend die folgenden Schritte:
Umformen der flachen Kunststoffolie in eine in Längsrichtung schlauchförmige Umhüllung mittels eines Hohlformers eines rechteckigen Querschnitts,
Einführen der zu verpackenden Artikel in die schlauchförmige Umhüllung durch eine an der Oberseite des Ausgabeschalters bzw. Ladentisches angeordnete und dem oberen Ende des Holformers angepaßte rechteckige Öffnung, (und)
Querschneiden und -schweißen der schlauchförmigen Umhüllung zur Ausbildung des Bodens des mit Artikeln zu füllenden Beutels und zum Schließen der Oberseite des gefüllten Beutels.

2. Verfahren nach Anspruch 1, dadurch gekennzeichnet, daß es ferner den Schritt des Zuführens der flachen Kunststofffolie von der Folienrolle oder -trommel zum Former längs einer mindestens einen abfallenden Teil aufweisenden Bahn oder Strecke umfaßt.

3. Verfahren nach Anspruch 1 oder 2, dadurch gekennzeichnet, daß es ferner den Schritt des längsgerichteten Abschneidens der schlaucförmigen Umhüllung von der Oberseite des Beutels zu einem Punkt zwischen Oberseite und Boden umfaßt, um zwei Handgriffe und eine Schutzhülle dazwischen bereitzustellen.

4. Verfahren nach Anspruch 3, dadurch gekennzeichnet, daß ferner die schlauchförmige Umhüllung in Querrichtung zwischen den Handgriffen perforiert wird, um das spätere Öffnen der Schutzhülle zu erleichtern.

5. Ausgabeschalter bzw. Ladentisch mit einer Vorrichtung zum Verpacken von Artikeln in an Ort und Stelle hergestellten Beuteln, wobei die Vorrichtung umfaßt:
einen Hohlformer bzw. ein hohles Formelement (17) eines vier- oder rechteckigen Querschnitts zum Umformen einer flachen Kunststoffolie (13) in eine längsverlaufende schlauchförmige Umhüllung (20),
Einrichtungen (39, 40, 42) zum Querschneiden dar schlauchförmigen Umhüllung (20) und zum Verschweißen der schlauchförmigen Umhüllung (20) zwecks Bildung eines geschlossenen Bodens eines geformten Beutels und zum Verschließen der Oberseite des gefüllten Beutels, (und)
eine an der Oberseite des Ausgabeschalters oder Ladentisches angeordnete und mit dem oberen Ende des Formers (17) übereinstimmende vier- oder rechteckige Öffnung (6) zum Einführen von Artikeln in die darunter liegende schlauchförmige Umhüllung (20).

6. Ausgabeschalter bzw. Ladentisch nach Anspruch 5, dadurch gekennzeichnet, daß die Zuführstrecke der flachen Folie (13) von der Folienrolle oder -trommel (12) zum Former (17) mindestens einen abfallenden Teil (18) aufweist.

7. Ausgabeschalter bzw. Ladentisch nach Anspruch 5 oder 6, dadurch gekennzeichnet, daß die rechteckige Öffnung (6) mit einem Deckel (74) versehen ist, der sich selbst in der Schließstellung zu blockieren bzw. zu sperren vermag, bis die Oberseite des gefüllten Beutels (38) verschweißt worden ist.

8. Ausgabeschalter bzw. Ladentisch nach Anspruch 5, dadurch gekennzeichnet, daß er ferner eine Einrichtung zum Ausbilden von zwei beabstandeten Handyriffen (89, 89') an der Oberseite des Beutels (38) und zum Festlegen einer Schutzhülle (92) (mittig) zwischen den Handgriffen aufweist.

9. Ausgabeschaltor bzw. Ladentisch nach Anspruch 8, ferner umfassend eine Einrichtung zum Perforieren der Oberseite des Beutels (38) zwischen den Handgriffen.

10. Ausgabeschalter bzw. Ladentisch nach Anspruch 5, dadurch gekennzeichnet, daß er weiterhin eine Einrichtung (118) zum kontinuierlichen Messen des Gewichts der Artikel in dem geformten Beutel (30) aufweist.

## Revendications

1. Procédé de fabrication de sacs à partir d'un film plastique plat dans une caisse-comptoir pour l'emballage d'articles à l'intérieur des sacs ainsi formés, comportant les étapes qui consistent :
à transformer le film plastique plat en une enveloppe tubulaire longitudinale au moyen d'un gabarit creux de section droite quadrangulaire ;
à introduire les articles devant être emballés dans ladite enveloppe tubulaire à travers une ouverture quadrangulaire située au sommet de la caisse-comptoir et s'adaptant à l'extrémité supérieure dudit gabarit creux ;
à sectionner transversalement et à sceller ladite enveloppe tubulaire pour constituer le fond du sac devant être rempli d'articles et à fermer le sommet du sac rempli.

2. Procédé suivant la revendication 1, caractérisé en ce qu'il comporte en outre l'étape qui consiste à alimenter le film plastique plat depuis un rouleau de film vers le gabarit le long d'un trajet comportant au moins une partie descendante.

3. Procédé suivant les revendications 1 ou 2, caractérisé en ce qu'il comporte en outre l'étape qui consiste à sectionner longitudinalement l'enveloppe tubulaire depuis le sommet du sac jusqu'à un point intermédiaire situé entre le sommet et le fond pour constituer entre ces éléments une paire de poignées et une enveloppe protectrice.

4. Procédé suivant la revendication 3, caractérisé en ce qu'il comporte en outre la perforation transversale de l'enveloppe tubulaire entre lesdites poignées pour faciliter l'ouverture ultérieure de l'enveloppe protectrice.

5. Caisse-comptoir comportant un appareil pour l'emballage d'articles dans des sacs fabriqués sur place, ledit appareil comprenant :
un gabarit creux (17) ayant une section droite quadrangulaire pour transformer un film plastique plat (13) en une enveloppe tubulaire (20) longitudinale ;
des moyens (39, 40, 42) pour sectionner transversalement l'enveloppe tubulaire (20) et pour sceller l'enveloppe tubulaire (20) afin de constituer un fond fermé d'un sac ainsi formé et pour fermer le sommet du sac rempli ;
une ouverture quadrangulaire (6) située au sommet de la caisse-comptoir et s'adaptant à l'extrémité supérieure du gabarit (17) pour introduire des articles à l'intérieur de l'enveloppe tubulaire (20) sous-jacente.

6. Caisse-comptoir suivant la revendication 5, caractérisée en ce que le trajet d'alimentation du film plat (13) depuis le rouleau de film (12) jusqu'au gabarit (17) comporte au moins une partie descendante (18).

7. Caisse-comptoir suivant les revendications 5 ou 6, caractérisée en ce que l'ouverture quadrangulaire (6) comporte un couvercle (74) qui est en mesure de s'autobloquer en position fermée jusqu'à ce que le sommet du sac (38) rempli ait été scellé.

8. Caisse-comptoir suivant la revendication 5, caractérisée en ce qu'elle comporte en outre des moyens pour former une paire de poignées (89, 89') espacées l'une de l'autre au sommet du sac (38) et pour délimiter une enveloppe protectrice (92) intermédiaire entre lesdites poignées.

9. Caisse-comptoir suivant la revendication 8, comportant en outre des moyens pour perforer le sommet du sac (38) entre lesdites poignées.

10. Caisse-comptoir suivant la revendication 5, caractérisée en ce qu'elle comporte en outre des moyens (118) pour détecter en continu le poids des articles contenus dans le sac (30) en cours de formage.
